(19) Europäisches Patentamt / European Patent Office / Office européen des brevets

(11) EP 1 978 784 B1

(12) **EUROPEAN PATENT SPECIFICATION**

(45) Date of publication and mention
of the grant of the patent:
**21.05.2014 Bulletin 2014/21**

(51) Int Cl.:
*H05B 3/74* (2006.01)        *G01K 7/42* (2006.01)
*H05B 6/68* (2006.01)

(21) Application number: **07105706.1**

(22) Date of filing: **05.04.2007**

(54) **Method for estimating the surface temperature of a random positioning cooking hob.**

Verfahren zur Schätzung der Oberflächentemperatur eines Zufallspositionskochfeldes

Procédé pour estimer la température de surface d'une plaque de cuisson de position aléatoire

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**08.10.2008 Bulletin 2008/41**

(73) Proprietor: **WHIRLPOOL CORPORATION
Benton Harbor
Michigan 49022 (US)**

(72) Inventors:
• **Pastore, Cristiano
  21025, Comerio (IT)**
• **Arione, Ettore
  21025, Comerio (IT)**
• **Petrigliano, Rocco
  21025, Comerio (IT)**

(74) Representative: **Guerci, Alessandro
Whirlpool Europe S.r.l.
Patent Department
Viale G. Borghi 27
21025 Comerio (VA) (IT)**

(56) References cited:
EP-A1- 1 170 264        GB-A- 2 100 883
JP-A- 8 054 293         JP-A- 11 039 283
US-A- 4 952 856         US-A1- 2002 113 057

EP 1 978 784 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for estimating the surface temperature of a cooking hob provided with a plurality of adjacent and co-operating heating elements, evenly distributed under the whole cooking hob surface (heat resistant surface), in which the heating elements are selectively energised to heat a cooking utensil that can be randomly positioned on the above cooking surface.

The method allows estimating the residual surface temperature, measurable after the use of the cooking hob, and generating a "hot surface" signal that remains active for a certain period after the heating elements have been de-energised, related to the specific portion of the cooking hob that has been energised.

Using a portion of the cooking hob for a relatively long period, the correspondent portion of heat-resistant hob surface, which is above the activated elements, may reach very high temperature values. These temperatures are still measurable as high even after the heating elements have been de-energised, for a period of time that varies from few to several minutes. That is the time needed to the portion of the heat-resistant surface to decrease its temperature under a "safety threshold" level, that does not causes injuries to the users, when touching it (i.e. for cleaning purposes). For this reason it becomes important to give a safety feedback to the user, preferably through a feedback signal implemented on the hob user interface, indicating that that portion of the hob surface is still "hot" (i.e. it has "residual heat") and therefore able to cause injuries, if touched.

It follows that a direct measurement of the temperature surface or an estimation method for the surface temperature is needed to generate a safety feedback signal used to warn the user on the potential risks of burns.

The warning indication needs to remain active after the use of the appliance (after all the heating elements have been switched off) and maintained active for the entire period in which surface temperature is above a predetermined "safety threshold", fixed around 50 to 60°C.

Solutions for measuring the hob surface temperature are already known in the art, in particular are known solutions for cooking hobs having heat resistant surfaces made of glass ceramic, either provided with electric heating elements or with gas burners. Some of these solutions carry out a direct and continue temperature measurement of the heating elements, and then generate a safety feedback signal accordingly.

In particular, DE-01-29619581 describes a glass-ceramic cooking hob with gas burners having surface heat level indicators operating by temperature sensitive micro-switches, providing indication of hazardous residual heat.

EP1109424 teaches a method and an apparatus for sensing the overheating of a food container positioned on a glass-ceramic cooking hob, during the food preparation. The apparatus to which the method refers includes a temperature sensor positioned on each of the electric heaters located under the glass of the cooking hob, and an electronic circuit connecting those sensors continuously measuring the temperature of the heaters. The apparatus and the method thereof switch off the heating elements when the temperature undergoes a sudden increase, relative to a value maintained constant with time during activation of the heating element. A feedback can be provided to the user.

US316472 describes an arrangement providing a signal that indicates the presence of a dangerous temperature in an electric heating element, after the heating element has been de-energised.

In general, solutions using temperature sensors present great technical problems, such as finding an appropriate location for the sensors. This becomes critical when having a large number of heating elements, as in the case of the above described hob, in which the needed number of sensors is substantially similar to the number of the heaters for the reason that each one of the heating elements can be activated independently from the others. In fact the number of sensors has to be dense enough to obtain a precise determination of the surface temperature. (i.e. to determine if the 60°C temperature measured by the sensor is due to the heating element just below the sensor powered to the minimum or to an heating element placed 20 cm aside powered to the maximum, and the consequent cooling time).

Moreover, the cost associated to the sensors is relevant, as well as to the harness system connecting the sensors, such system being designed to resist for a long time to high temperature environment in the proximity of the electric or gas heating elements. Then, a dense disposition of temperature sensors requires a complex electronic circuit to read them, driving the cost to an unaffordable level for a cooking hob.

In the art, solutions that estimate the surface temperature instead of measuring it are also known, sometimes used in combination with a timer device to generate the "hot surface" signal.

For instance, EP 0918196 discloses a system indicating the residual heat of the pan support grids for gas burners of domestic cooking or heating appliances controlled by an electronic device. The residual heat of the grid is estimated on the basis of data related to the flame level set for the single burner and the time for which said flame level is maintained. An electronic logic is used for this purpose and also to activate a "hot grid" warning signal, and maintained active until the estimated temperature decreases below the "safety threshold".

DE 3118399 and GB2100883 disclose an apparatus and a method providing a virtual temperature sensing for an electric cooker having one or more separated heating elements provided with resistors (i.e. hot plates), in which the heating zones are graphically delimited and visible to the users.

The apparatus and the related method requires an input device to regulate the energy level of the heating elements and a switching network carrying out this regulation in a finite number of steps. The power level set and the time for which each single heating element is active at the set power level are the inputs of a computing device included into the hob control. The computing device can estimate the hob surface temperature just above each of the heating elements. The estimation is then used to generate a temperature-related signal, like a user-warning signal. There could be present also a timer, fed with the temperature-related signal, used to define the duration for which an indication signal, related to the previously activated zone, is maintained active on the user interface.

A drawback of these solutions is in that they are not considering the impact on the surface temperature of the heat generated by the adjacent heating elements, which can be significant. This effect is particularly important in a cooking hob (as, for instance the ones described in EP1303168 and in EP1505854), provided with a large number (i.e greater than 20) of adjacent and co-operating heating elements, configured and controlled in a matrix fashion, with the possibility of independently controlling subsets of these elements, located in zones not predetermined of the hob area, and having different shapes and sizes, being these elements linked to the portions of cooking surface on which cooking utensils are placed. The closeness of the heating elements, each of them not thermally separated with barriers from the others, causes a significative heat exchange, for the cooking surface correspondent to the underneath activated element, with the adjacent portions of the same surface. The portions of surface not directly heated by the underneath heating element can also transfer, by thermal conduction, some heat to the adjacent surface elements.

These components of the exchanged heat should be strongly considered by the control algorithm that activates the heating element, in order to prevent any glass breakage condition.

Moreover, in such cooking hob, implementing a user warning indication through a safety feedback signal that doesn't take in consideration the heat exchanged among the adjacent surface portions can be hazardous for the user, for well known reasons.

There is then the need to provide realistic time estimation avoiding long waiting periods for the user, before to safely proceed touching the hob surface. Only through a relatively accurate temperature measurement/estimation for the activated portions of the cooking hob surface and of its surrounding, it is possible to obtain such time estimation.

It is now clear that, using known methods/apparatus it's not possible to generate a reliable surface temperature instant map, either by a direct sensor measurement or through a good temperature estimation, when having a cooking hob provided with a plurality of adjacent and co-operating heating elements, as above described.

The object of the present invention is therefore to provide a method that does not present the drawbacks of the prior art.

Particularly, the method of the present invention as defined by independent claim 1 meets this object and estimates the temperature distribution over the cooking surface with a resolution equivalent to the number of heating elements disposed underneath the cook hob surface. Based on this estimation, the glass breakage risk is prevented, and the "hot surface" indication together with a "residual heat" feedback can be provided to the user. The estimation method here disclosed is based on the input of the power profile set on each heating element. The estimation method of the present invention acts like a virtual sensor which makes use of the energization "history" of the single elements and hence linked with the method used to energise the heater, without the need to measure directly or indirectly the surface temperature by means of a sensor device. Such virtual sensors estimate a temperature, that corresponds to the real temperature, of each area of the heat-resistant surface placed over the single heating element belonging to the heating elements' lattice. With a further calculation it can be estimated the temperature of each zone of the cooking hob heat-resistant surface with a geometrical resolution equals to the area of one heating element, creating a temperature map of the overall cooking hob surface for each time instant. The temperature map is used by the control algorithm of the cooking hob control to evaluate whether the thermal distribution is compatible with the glass breakage risks, for instance evaluating the temperature gradients of the hob surface, and therefore carrying out corrective control actions such as by switching off the elements for a certain time, or by making any other action needed to reduce the magnitude of the temperature gradients that indicate an incoming glass breakage risk.

The map temperatures are also compared with the predetermined "threshold risk" value, in order to verify the presence of any "hot surface" zone and therefore to generate an alert signal for the user, for that specific zone, and eventually reporting a specific "remaining heat" indication on the user interface.

The present invention addresses also the need to avoid usage of a high number of costly temperature sensors so that it can be carried out also in mid and low level classes of household appliances.

The present invention addresses also the need to be implemented into low cost microprocessors, as those used in household appliances.

Other features and advantages of the present invention will become readily apparent to the man skilled in the art from the following detailed description when read in light of the accompanying drawings, in which:

- Figure 1 shows a cooking hob surface, a detail about the plurality of heating elements underneath the cooking hob surface and an expanded detail of the user interface;
- Figure 2 shows the cooking hob surface virtually partitioned by a pattern of hexagonal elements, wherein each single surface portion has an underneath heating element and wherein all the heating elements are organised and controlled in matrix fashion;

- Figure 3b shows the activation of two clusters of heating elements located underneath the area of the cooking surface on which cooking utensils are positioned;

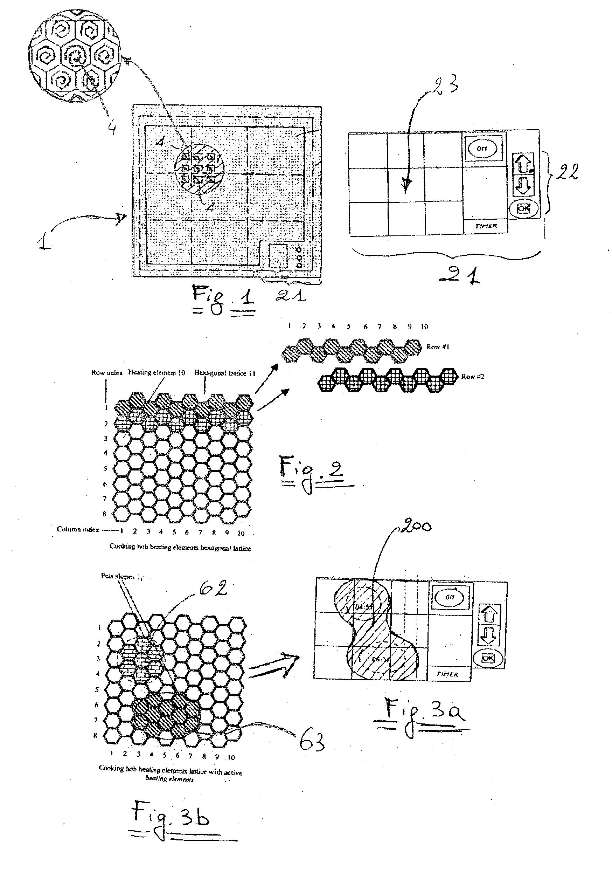

- Figure 3a shows a detail of the safety feedback generated on the user interface by the clusters of figure 3b

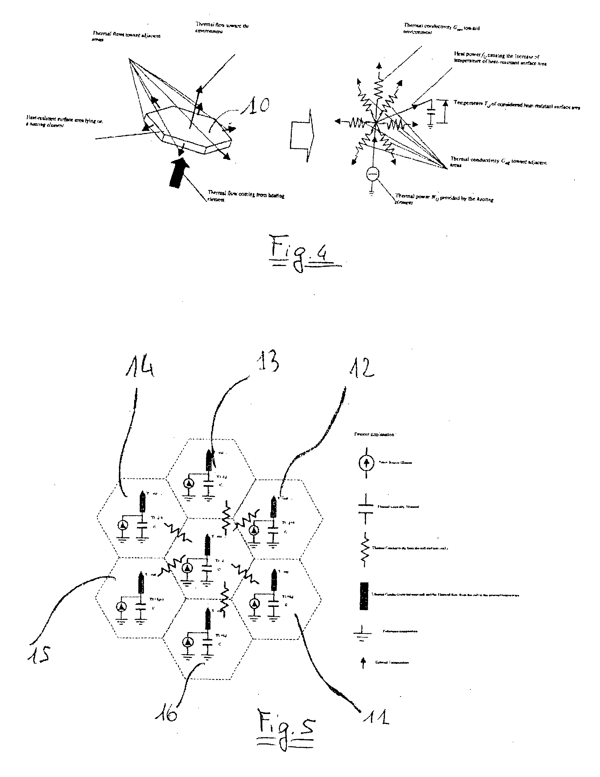

- Figure 4 shows two representations of heat exchange model for the single surface portion having an underneath heating element;
- Figure 5 shows a heat exchange model of a single surface portion described in Figure 4, with the adjacent portions;

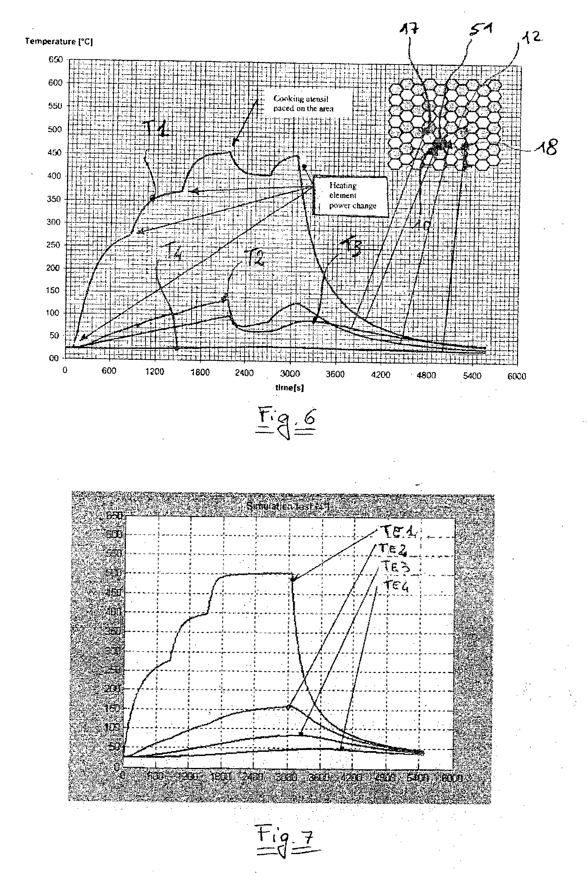

- Figure 6 shows plots of actual temperatures measured on a single portion and of its surrounding portions of the hob surface, referred to the hob sectors indicated in the schematic representation of the hob, in which only one single heating element has been activated; and
- Figure 7 is the graphic plot of the temperatures of the surface portion during an initial period of 1800 seconds, whose real temperatures are plotted in Fig. 6, estimated according to the method of the present invention.

With reference to Fig. 1, the cooking hob 1 has a surface 100 made of heat resistant material, for instance tempered glass, on which cooking utensils (not shown), are placed. A touch control user interface 23 has keys 22 to deliver inputs to set the cooking hob 1, and a display 21 to provide information about the working status of the hob 1, including an "hot surface" warning indication 200, to warn the user about potential risks of burning. A plurality of heating elements 4 each of them shaped as a regular hexagon provided with the same power rating W, are disposed under the cooking hob surface 100 and organised in a matrix fashion.

As showed in Fig. 2, the cooking hob surface 100 is virtually partitioned into a set of single surface portions 10 (Figure 4), having the geometry of the underneath heating elements 4, and therefore presenting the same thermal characteristics. It become so possible to identify each single surface portion 10 using the matrix co-ordinates and identify, for instance, surface portions belonging to Row #1, Row #2, Row #i (i=1..m) or to Column #1, Column #2, Column #j (j=1..n).

As represented in Fig. 3b, the heating elements 4 are selectively energised to heat a cooking utensil that can be randomly positioned on the above cooking surface. The heating elements can be activated separately (as the element 51 shown in Fig. 6), or in cluster 62,63 (figure 3b), according to the number and shape of the cooking utensil. It is here highlighted that, differently from the plate heaters used in glass ceramic hobs and mainly due to the high density of the heating elements 4 applied in this hob configuration, there isn't any thermally insulating barrier/border separating each heating element 4 from the others.

With reference to figure 1 and 5, it follows that the heat flow generated by the single heating element 4 when dissipating an electric power W can be transferred to the above single surface portion 10 and to the adjacent surface surrounding portions 11,12,13,14,15,16, not immediately above the same heating element 4, because no insulating barriers contain it.

As depicted on Fig. 4 and 5, the method of the present invention is based on the mathematical model describing the thermal system composed by the heater and its above surface and the surrounding areas. In this example of model, the single surface portion 10 of the cooking hob surface 100 above a given heating element 4, is modelled as an heat capacity, and the thermal power exchanged is described by mean of heat fluxes impacting and crossing the same surface portion 10. The heat fluxes considered in the model are: the thermal (heat) flow towards the external environment, the thermal flow supplied from the heating element 4 and the thermal flow toward/from the surrounding surface portions 11,12,13,14,15,16.

The mathematical model is a constant and concentrates parameters model and can be analysed taking into account only the topology of the physical device without any consideration for its geometry.

The model of the single surface portion 10 can be applied to all the surface elements composing the entire heat-resistant cooking hob surface100.

A mathematical model is defined through a proper set of equations, which includes a certain number of parameters. The numerical values of these model parameters (model coefficients) need to be calculated. They are easily obtained applying computational techniques, such as computer simulations, model identification techniques or optimisation techniques.

The single heating element of this invention has the geometric shape of a regular hexagon, but the model is applicable to heating elements shaped as regular triangles, squares, circles, and rectangles.

The method also considers if the elements are re-activated before the corresponding surface has been completed or partially cooled, in order to calculate a relatively accurate temperature map.

Some preliminary definitions are hereafter given:

- being the heating elements arranged in a matrix fashion, and being r and c respectively the number of rows and the number of columns of said matrix, the single heating element $h_{i,j}$ is identified by mean of its row and column co-ordinates i and j;
- $a_{i,j}$ is the heat-resistant surface portion 10 overhanging the considered heating element $h_{i,j}$.

For sake of simplicity such portion 10 of the cooking hob surface 100 can be thought having the same shape and dimensions of the underneath-heating element 4.

Modelling the heat exchange phenomena, the following set of equations are obtained:

$$W_{i,j}(t) = f_{i,j}(t) + \left(T_{i,j}(t) - T_{env}\right) \cdot G_{env} + \sum_{k,v} \left(T_{i,j}(t) - T_{k,v}(t)\right) \cdot G_{adj}$$

$$T_{i,j}(t+1) = T_{i,j}(t) + f_{i,j}(t) \cdot \frac{\Delta t}{C}$$

in which:

$W_{i,j}(t)$ is the instantaneous power (the heat flux) [Watt] dissipated by the heating element $h_{i,j}$ through the surface portion 10;

$f_{i,j}(t)$ is the instantaneous heat flux (power) [Watt] contributing to the temperature variation for the area $a_{i,j}$;

$T_{i,j}$ is the temperature [°C] of the area $a_{i,j}$;

$T_{env}$ is the ambient temperature [°C] which can be considered constant and set equal to 25°C;

$T_{k,v}$ is the temperature [°C] of the area $a_{k,v}$ belonging to each of the six heating elements bordering with $h_{i,j}$;

$G_{adj}$ is the thermal conductivity [Watt/°C] between the single surface portion 10 and the surrounding surface portions 11,12,13,14,15,16;

$G_{env}$ is the overall heat exchange coefficient [Watt/°C] between the area $a_{i,j}$ and the ambient;

C is the thermal capacity [Joule/°C] of the area $a_{i,j}$;

$\Delta t$ is the fixed duration of the integration interval [s].

This mathematical model is a discrete time model, useful to be implemented with a simple microprocessor. Anyway there's no need to have a constant duration of the integration interval. The method works properly also using variable integration intervals, as long as that duration is small if compared to the system time response. The discrete time step or the integration interval duration should preferably be chosen at least 10 times shorter than the thermal time constant, defined as the time which is needed to cool down a single cell from a previously achieved steady state high temperature to a 63% lower temperature with respect to the room temperature. In this implementation the integration interval is constant and equal to 2 seconds.

So, for example, from the first equation of the model it is possible to obtain the value of $f_{i,j}$ for the given integration interval. Its value, used into the second equation allows the evaluation of the new value of $T_{i,j}$.

In said equations, the unknown quantities are $G_{adj}$, $G_{env}$, and C, and need to be numerically quantified by making some reasonable assumptions.

It is a good approximation to suppose $G_{adj}$ constant, while $G_{env}$ is heavily influenced by the heat exchange rate between the given area $a_{i,j}$ and the environment. From thermodynamics it is always possible to describe a relationship between $G_{env}$ and the difference of temperature ($T_{i,j} - T_{env}$). Such relationship can be expressed, for instance, trough the equation

$$\left(T_{i,j}(t) - T_{env}\right) \cdot G_{env} = \left(T_{i,j}(t) - T_{env}\right) \cdot \left(h_0 + F(T_{i,j}(t) - T_{env})\right) + K_{irr} \cdot \left(T_{i,j}(t)^4 - T_{env}^4\right)$$

wherein:

$$\left(T_{i,j}(t) - T_{env}\right) \cdot \left(h_0 + F(T_{i,j}(t) - T_{env})\right)$$

represents the convective thermal exchange, and

$$F(T_{i,j}(t) - T_{env})$$

represents the non-linear part of the heat exchange due to natural convection with high thermal gradient, and wherein

$$K_{irr} \cdot \left( T_{i,j}(t)^4 - T_{env}^{\,4} \right) = \left( T_{i,j}(t) - T_{env} \right) \cdot K_{irr} \cdot \left( T_{i,j}(t)^2 + T_{env}^{\,2} \right) \cdot \left( T_{i,j}(t) + T_{env} \right)$$

is the thermal exchange due to radiation.

Summing the two contributions it is obtained:

$$\left( T_{i,j}(t) - T_{env} \right) \cdot G_{env} = \left( T_{i,j}(t) - T_{env} \right) \cdot \left( h_0 + F(T_{i,j}(t) - T_{env}) + K_{irr} \cdot \left( T_{i,j}(t)^2 + T_{env}^{\,2} \right) \cdot \left( T_{i,j}(t) + T_{env} \right) \right)$$

and

$$G_{env} = h_0 + F(T_{i,j}(t) - T_{env}) + K_{irr} \cdot \left( T_{i,j}(t)^2 + T_{env}^{\,2} \right) \cdot \left( T_{i,j}(t) + T_{env} \right)$$

The result is a complex equation of 3rd order. Experimental data collected on the real system allow simplifying the formula as follow:

$$G_{env} = H_0 + H_1 \cdot \left( \left| T_{i,j} - T_{env} \right| \right)^3$$

wherein:

$H_0$ is a constant indicating the conductive and natural convective thermal exchange [Watt/°C],
$H_1$ is a constant indicating the radiating and the non-linear convective part of the thermal exchange [Watt/°C$^4$].

From thermodynamics and by considering the thermal characteristics of the heat-resistant surface material made of tempered glass, the values $G_{adj}$, $H_0$, $H_1$, and C. are determined after solving the set of equations by means of a known identification algorithms (i.e Least Mean Square) running on a computing machine. The obtained values are those optimising the temperature estimation of the single portion of heat-resistant surface (for a predetermined heat-resistant surface

The calculated values are:

$G_{adj}$=0,04 Watt/°C
$H_0$=0,025 Watt/°C
$H_1$=1,45 nWatt/°C$^4$
C=62,7 Joule/°C

Having calculated the model parameters $G_{adj}$, $H_0$, $H_1$, C, the model is completely defined and is therefore possible determine the temperature of the surface portion 10 running a computational algorithm implementing the above defined model.

In Fig. 6 the measured temperatures T1,T2,T3,T4 of a single surface portion 10, 51 and of the surrounding surface portions 12,17,18 are plotted. These temperatures are obtained by carrying out power level regulations (increases and decreases) through the keys 22 hob user interface 21, controlling the heating element 51, having a cooking utensil (not shown) positioned on the above portion of the cooking surface 100. This sequence of power increase and decrease along the time, is the energization history of the heating elements belonging to the cluster 62, 63, used as input for method to determine the temperature of the surface portion 10.

In fig 7 the temperatures TE1, TE2, TE3, TE4 estimated by applying the method according to the present invention, and corresponding to the measured temperatures T1, T2, T3, T4, during the initial time period of 1800 sec are plotted.

A safety temperature margin has been added to the calculation in order to improve, in a reasonable way, the safety of the system that means overestimate of some degrees, rather than underestimate, the temperature of the surface portion 10. Adding a temperature margin is particularly useful when evaluating the glass breakage conditions and when issuing a "hot surface" signal.

The mathematical model of the single surface area can be applied to each area of the heat resistant surface, defining a temperature map of the whole heat-resistant surface at a certain instant.

Such temperature map is therefore used together with the control algorithm that activates the heating element, for preventing any glass breakage condition.

A further use of the temperature map obtained according to the method of the present invention consists in comparing the values of the single estimated temperatures or either the whole temperature map with a predetermined "safety threshold" temperature Ts (i.e.set equal to 60°C), to determine if there are zones presenting high temperatures and generating a warning indication 200, to be displayed on the display 21 of the user interface 23, alerting the users on the risk of burning if touching those zones, as appearing in Fig 3a, maintaining this warning indication after the de-energization of the elements, for the time needed to have a predetermined temperature decrease. New temperature values, related to any of the hob surface elements, are calculated often as necessary in order to obtain an updated temperature map of the whole hob surface. The warning indication related to a surface element can be switched off whenever the estimated temperature value decreases under the value of "safety threshold".

The virtual sensing method disclosed could be implemented by mean of a digital device i.e. based on a low cost microprocessor.

The described mathematical model described by its equation can be more accurate, for instance by including more accurate heat exchange models (i.e. including convective heat exchange) or even simpler (neglecting radiation contribution).

According to the present invention it is possible to avoid the use of an array or grid of temperature sensors for high temperature measurement. Moreover, the method allows also a relatively accurate determination of the temperature map of the cooking hob surface 100. Such temperature map could be used to provide a reliable residual heat indication and used to prevent glass breakage conditions. Finally, the method of the present invention provides a higher reliability compared to any other method using temperature sensors, because there is no sensor exposed to high temperature values, and consequently lifetime and accuracy are increased.

**Claims**

1. A method to estimate the temperature ($T_{i,j}$) of a single portion ($a_{i,j}$, 10) of a cooking surface (100), the single portion ($a_{i,j}$, 10) being integral with other single adjacent portions (11,12,13,14,15), all together the single portions virtually partitioning the cooking surface (100) of a cooking hob (1) provided with a plurality of heating elements (4) underneath the cooking hob surface (100), these heating elements (4) being actionable separately (51) or in clusters (61,62), the method comprising a computational algorithm having as input the power ($W_{i,j}(t)$) dissipated by the each of the heating elements (4) to its superposed single portion (10) **characterised in that** it also calculates the heat fluxes ($f_{i,j}(t)$) which are exchanged by the single portion (10) with the other adjacent portions (11,12,13,14,15).

2. A method according to claim 1, **characterised in that** the heat fluxes (fi(t)) exchanged by the single portion ($a_{i,j}$, 10) with the adjacent single surface portions (11,12,13,14,15) are calculated using the thermal conductivity ($G_{adj}$) between the single surface portion ($a_{i,j}$, 10) and the surrounding surface single portions (11,12,13,14,15,16) of the cooking surface.

3. A method according to claim 1, **characterised in that** the determined temperature ($T_{i,j}$) of the surface portion ($a_{i,j}$, 10) is used by the cooking hob control to execute corrective control actions such as switching off the elements for a certain time, or any other action needed to prevent a breakage of the cooking surface (100).

4. A method according to claim 1, **characterised in that** it is used to generate a temperature map of the cooking surface (100)

5. A method according to claim 1, **characterised in that** the temperature ($T_{i,j}$) determined for the single portion ($a_{i,j}$,

10) is compared with a predetermined safety threshold temperature (Ts) to generate a warning indication.

**6.** A method according to claim 5, **characterised in that** the warning indication (200) is displayed on the display (21) of the user interface (23).

**7.** A method according to claim 6, **characterised in that** the warning indication (200) indicates the "hot surface" zones.

**8.** A method according to claim 6, **characterised in that** the warning on the user interface indicates the time needed to elapse before the safety indication on the user interface disappears.

## Patentansprüche

**1.** Verfahren zum Schätzen der Temperatur ($T_{i,j}$) eines Einzelabschnitts ($a_{i,j}$, 10) einer Kochfläche (100), wobei der Einzelabschnitt ($a_{i,j}$, 10) mit anderen angrenzenden Einzelabschnitten (11, 12, 13, 14, 15) einstückig gebildet ist, wobei alle Einzelabschnitte zusammen die Kochfläche (100) eines Kochfeldes (1) virtuell unterteilen, das mit mehreren Heizelementen (4) unter der Kochfeldfläche (100) ausgestattet ist, wobei diese Heizelemente (4) einzeln (51) oder in Gruppen (61, 62) aktiviert werden können, wobei das Verfahren einen Berechnungsalgorithmus umfasst, der als Eingabe die Energie ($W_{i,j}(t)$) aufweist, die jedes der Heizelemente (4) an seinen darüber liegenden Einzelabschnitt (10) abgibt, **dadurch gekennzeichnet, dass** es außerdem die Wärmeflüsse ($f_{i,j}(t)$) berechnet, die der Einzelabschnitt (10) mit den anderen angrenzenden Abschnitten (11, 12, 13, 14, 15) tauscht.

**2.** Verfahren nach Anspruch 1, **dadurch gekennzeichnet, dass** die Wärmeflüsse (fi(t)), die der Einzelabschnitt ($a_{i,j}$, 10) mit den angrenzenden Einzelflächenabschnitten (11, 12, 13, 14, 15) tauscht, mit Hilfe der Wärmeleitfähigkeit ($G_{adj}$) zwischen dem Einzelflächenabschnitt ($a_{i,j}$, 10) und den umgebenden Einzelflächenabschnitten (11, 12, 13, 14, 15, 16) der Kochfläche berechnet werden.

**3.** Verfahren nach Anspruch 1, **dadurch gekennzeichnet, dass** die bestimmte Temperatur ($T_{i,j}$) des Flächenabschnitts ($a_{i,j}$, 10) von der Kochfeldsteuerung verwendet wird, um korrigierende Steuervorgänge, wie das Abschalten der Elemente für eine bestimmte Zeit, oder einen anderen Vorgang auszuführen, der notwendig ist, um ein Zerspringen der Kochfläche (100) zu verhindern.

**4.** Verfahren nach Anspruch 1, **dadurch gekennzeichnet, dass** es angewandt wird, um ein Temperaturkennfeld der Kochfläche (100) zu erzeugen.

**5.** Verfahren nach Anspruch 1, **dadurch gekennzeichnet, dass** die Temperatur ($T_{i,j}$), die für den Einzelabschnitt ($a_{i,j}$, 10) bestimmt wird, mit einer festgelegten Sicherheitsgrenzwert-Temperatur (Ts) verglichen wird, um eine Warnangabe zu erzeugen.

**6.** Verfahren nach Anspruch 5, **dadurch gekennzeichnet, dass** die Warnangabe (200) auf der Anzeige (21) der Benutzerschnittstelle (23) angezeigt wird.

**7.** Verfahren nach Anspruch 6, **dadurch gekennzeichnet, dass** die Warnangabe (200) die "Heißflächen"-Zonen angibt.

**8.** Verfahren nach Anspruch 6, **dadurch gekennzeichnet, dass** die Warnung auf der Benutzerschnittstelle die Zeit angibt, die verstreichen muss, bevor die Sicherheitsangabe auf der Benutzerschnittstelle erlischt.

## Revendications

**1.** Procédé pour estimer la température ($T_{ij}$) d'une portion individuelle ($a_{ij}$, 10) d'une surface de cuisson (100), la portion individuelle ($a_{ij}$, 10) faisant partie intégrante d'autres portions individuelles adjacentes (11, 12, 13, 14, 15), les portions individuelles divisant virtuellement toutes ensemble la surface de cuisson (100) d'une plaque de cuisson (1) pourvue d'une pluralité d'éléments chauffants (4) en dessous de la surface (100) de la plaque de cuisson, ces éléments chauffants (4) étant actionnables séparément (51) ou par groupes (61, 62), le procédé comprenant un algorithme de calcul ayant en entrée la puissance ($W_{ij}(t)$) dissipée par chacun des éléments chauffants (4) sur sa portion individuelle superposée (10), **caractérisé en ce qu'**il calcule également les flux de chaleur ($f_{ij}(t)$) qui sont

échangés par la portion individuelle (10) avec les autres portions adjacentes (11, 12, 13, 14, 15).

2. Procédé selon la revendication 1, **caractérisé en ce que** les flux de chaleur ($f_{ij}(t)$) échangés par la portion individuelle ($a_{ij}$, 10) avec les portions de surface individuelles adjacentes (11, 12, 13, 14, 15) sont calculés en utilisant la conductibilité thermique ($G_{adj}$) entre la portion de surface individuelle ($a_{ij}$, 10) et les portions de surface individuelles environnantes (11, 12, 13, 14, 15) de la surface de cuisson.

3. Procédé selon la revendication 1, **caractérisé en ce que** la température déterminée ($T_{ij}$) de la portion de surface ($a_{ij}$, 10) est utilisée par la commande de la plaque de cuisson pour exécuter des actions de commande correctives telles que la déconnexion des éléments pendant un certain temps, ou toute autre action nécessaire pour empêcher une rupture de la surface de cuisson (100).

4. Procédé selon la revendication 1, **caractérisé en ce qu'**il est utilisé pour générer une carte de température de la surface de cuisson (100).

5. Procédé selon la revendication 1, **caractérisé en ce que** la température ($T_{ij}$) déterminée pour la portion individuelle ($a_{ij}$, 10) est comparée à une température de seuil de sécurité prédéterminée (Ts) pour générer une indication d'avertissement.

6. Procédé selon la revendication 5, **caractérisé en ce que** l'indication d'avertissement (200) est affichée sur l'écran d'affichage (21) de l'interface utilisateur (23).

7. Procédé selon la revendication 6, **caractérisé en ce que** l'indication d'avertissement (200) indique les zones de « surface chaude ».

8. Procédé selon la revendication 6, **caractérisé en ce que** l'avertissement à l'interface utilisateur indique le temps nécessaire qui doit s'écouler avant que l'indication de sécurité à l'interface utilisateur ne disparaisse.

Fig. 1

Fig. 2

Cooking hob heating elements hexagonal lattice

Fig. 3a

Fig. 3b

Cooking hob heating elements lattice with active heating elements

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 0129619581
- EP 1109424 A
- US 316472 A
- EP 0918196 A
- DE 3118399
- GB 2100883 A
- EP 1303168 A
- EP 1505854 A